(19) Europäisches Patentamt
European Patent Office
Office européen des brevets

(11) EP 4 502 003 A1

(12) **EUROPEAN PATENT APPLICATION**
published in accordance with Art. 153(4) EPC

(43) Date of publication:
**05.02.2025 Bulletin 2025/06**

(21) Application number: **23780627.8**

(22) Date of filing: **28.03.2023**

(51) International Patent Classification (IPC):
***C08G 63/91*** *(2006.01)* ***B32B 27/30*** *(2006.01)*
***B32B 27/36*** *(2006.01)* ***C08L 101/16*** *(2006.01)*

(52) Cooperative Patent Classification (CPC):
**B32B 27/30; B32B 27/36; C08G 63/91; C08L 101/16**

(86) International application number:
**PCT/JP2023/012697**

(87) International publication number:
**WO 2023/190618 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 JP 2022051108**
**28.03.2022 JP 2022051567**

(71) Applicant: **Mitsubishi Chemical Corporation**
**Tokyo 100-8251 (JP)**

(72) Inventors:
- **SAKA, Takahiro**
  **Tokyo 100-8251 (JP)**
- **TANIGUCHI, Masahiko**
  **Tokyo 100-8251 (JP)**

(74) Representative: **Vossius & Partner**
**Patentanwälte Rechtsanwälte mbB**
**Siebertstrasse 3**
**81675 München (DE)**

(54) **ACID-MODIFIED POLYESTER RESIN, LAMINATE AND BIODEGRADABLE ADHESIVE**

(57) An aspect of the present invention relates to an acid-modified polyester-based resin in which an α,β-unsaturated carboxylic acid and/or an anhydride thereof (X) is grafted to an aliphatic-aromatic polyester-based resin containing an aliphatic diol unit, an aliphatic dicarboxylic acid unit, an aromatic dicarboxylic acid unit, the acid-modified polyester-based resin has a melt flow rate (210°C, load: 2160 g) of 1.4 g/10 min to 15 g/10 min, and a content of the α,β-unsaturated carboxylic acid and/or an anhydride thereof (X) is 0.0001 to 0.8 parts by mass with respect to 100 parts by mass of the aliphatic-aromatic polyester-based resin.

EP 4 502 003 A1

## Description

### TECHNICAL FIELD

The present invention relates to an acid-modified polyester-based resin, and more specifically relates to an acid-modified polyester based resin preferably used for an adhesive layer between a polyvinyl alcohol based resin layer (hereinafter, polyvinyl alcohol is referred to as "PVA") and a biodegradable resin layer such as a polylactic acid. In addition, the present invention also relates to a laminate including a layer containing the acid-modified polyester-based resin, and a biodegradable adhesive containing the acid-modified polyester-based resin.

### BACKGROUND ART

Plastics are excellent in moldability, strength, water resistance, transparency, and the like, and therefore are widely used as packaging materials. Examples of the plastics for use in packaging materials include polyolefin-based resins such as a polyethylene and a polypropylene; vinyl-based resins such as polystyrenes and polyvinyl chloride; and aromatic polyester-based resins such as polyethylene terephthalate. However, these plastics have low biodegradability, and therefore, when they are dumped in nature after use, they remain for a long period of time and therefore may spoil the landscape or cause environmental disruption in some case.

On the other hand, recently, a biodegradable resin, which is biodegradable or hydrolyzed in soil or water, and therefore is useful for preventing environmental pollution, has drawn attention, and the practical application thereof has been studied. As such a biodegradable resin, an aliphatic polyester-based resin, cellulose acetate, and modified starch, and the like are known. As a packaging material, polylactic acid, a polycondensate of adipic acid/terephthalic acid/1,4-butanediol, a polycondensate of succinic acid/1,4-butanediol/lactic acid, and the like are used because of having excellent transparency, heat resistance and strength.

However, an aliphatic polyester-based resins such as polylactic acid has insufficient oxygen gas barrier properties, and therefore cannot be used alone as a packaging material for a content that may be oxidatively degraded such as food and a drug.

Therefore, a laminate in which a coating layer formed from PVAhaving excellent gas barrier properties and also having biodegradability on at least one surface of a polylactic acid film has been proposed (see, for example, Patent Literature 1).

In addition, as a biodegradable laminate capable of being coextrusion-laminated and further being subjected to a heat-stretching treatment by using a melt-moldable PVA resin, a biodegradable laminate having both surfaces of a gas barrier layer, in which a PVA-based resin having a 1,2-diol structure in its side chain as a main component are sandwiched by aliphatic polyester layers whose melting point is different from that of the gas barrier layer by 20°C or lower, has been proposed (see, for example, Patent Literature 2).

However, since the surface properties of a polylactic acid-based resin layer are largely different from those of a PVA-based resin layer, the adhesiveness between these layers is poor, and therefore, it is difficult to obtain practically usable interlayer adhesion strength by directly laminating the two layers. For example, Patent Literature 1 proposed a surface activation treatment to be applied to a polylactic acid film such as a corona discharge treatment, a flame treatment, or an ozone treatment, or an anchor coating treatment, but it is still not satisfactory and there is still a lot of room for improvement.

In addition, in Patent Literature 2, the interlayer adhesiveness between the polylactic acid-based resin layer and the PVA-based resin layer is slightly improved by the coextrusion-lamination, but is not enough for practical application.

Therefore, in order to obtain good interlayer adhesiveness between the polylactic acid-based resin layer and the PVA-based resin layer, it is necessary to provide an adhesive layer between the two layers. Further, in order to make the use of the biodegradability of the polylactic acid-based resin and the PVA-based resin, the adhesive layer used for a laminate containing the two resins is also required to have biodegradability.

In view of the above, a polyester-based resin having a polar group, which is obtained by a graft reaction of an $\alpha,\beta$-unsaturated carboxylic acid or an anhydride thereof to a biodegradable polyester-based resin has been proposed as the adhesive layer (see, for example, Patent Literature 3).

### CITATION LIST

### PATENT LITERATURE

Patent Literature 1: JP-A-2000-177072

Patent Literature 2: JP-A-2009-196287
Patent Literature 3: JP-A-2013-212682

SUMMARY OF INVENTION

TECHNICAL PROBLEM

However, the biodegradable polyester-based resin proposed in the above Patent Literature 3 may have poor fluidity during multi-layer film formation, resulting in poor melt moldability, and the appearance may be degraded when forming into a laminate. Therefore, a first object of the present invention is to provide an acid-modified polyester-based resin with excellent melt moldability and in which a laminate having an excellent appearance can be obtained, for example, in a case of being used in a laminate including a PVA-based resin layer and a biodegradable resin layer, as an adhesive layer between the two layers.

In addition, in the technique in Patent Literature 3 described above, a melt flow rate (MFR) of the resin may decrease over time during storage. When used for multi-layer film formation, the fluidity of the resin in an extruder may deteriorate, resulting in poor melt moldability. Therefore, a second object of the present invention is to provide an acid-modified polyester-based resin with excellent melt moldability and in which decrease in MFR during storage is suppressed.

SOLUTION TO PROBLEM

The inventors of the present invention made intensive studies on the above problems.

Then, the inventors of the present invention have found that the above first problem can be solved by using an acid-modified polyester-based resin having a specific MFR value, in which an MFR is higher than that of conventional resins in a polyester-based resin subjected to acid modification. Thus, the present invention has been completed.

In addition, the inventors of the present invention made intensive studies on the above second object and found that it can be solved by using an acid-modified polyester-based resin which satisfies a specific formula in a polyester-based resin subjected to acid modification.

That is, the present invention relates to the following aspects 1 to 11.

An aspect 1 of the present invention relates to an acid-modified polyester-based resin wherein an $\alpha,\beta$-unsaturated carboxylic acid and/or an anhydride thereof (X) is grafted to an aliphatic-aromatic polyester-based resin containing an aliphatic diol unit, an aliphatic dicarboxylic acid unit, and an aromatic dicarboxylic acid unit,

the acid-modified polyester-based resin has a melt flow rate (210°C, load: 2160 g) of 1.4 g/10 min to 15 g/10 min, and a content of the $\alpha,\beta$-unsaturated carboxylic acid and/or an anhydride thereof (X) is 0.0001 to 0.8 parts by mass with respect to 100 parts by mass of the aliphatic-aromatic polyester-based resin.

An aspect 2 of the present invention relates to the acid-modified polyester-based resin according to the aspect 1 comprising:
the aliphatic diol unit and the aliphatic dicarboxylic acid unit in a total amount of 50% by mole or more.

An aspect 3 of the present invention relates to the acid-modified polyester-based resin according to the aspect 1 or 2 wherein
a radical initiator (Y) is contained during grafting.

An aspect 4 of the present invention relates to the acid-modified polyester-based resin according to the aspect 3, in which
a content ratio (Y'/X) of a radical (Y') obtained from the radical initiator (Y) to the $\alpha,\beta$-unsaturated carboxylic acid and/or an anhydride thereof (X) is 0.5 to 5 in molar ratio.

An aspect 5 of the present invention relates to an acid-modified polyester-based resin, in which
a temperature-dependent coefficient $\alpha$ determined by plotting an MFR (melt flow rate) change rate coefficient K, which is calculated by plotting a change of an MFR over time during storage at a plurality of temperatures according to the following formula (I), at each storage temperature based on the following formula (II) satisfies the following formula (III).

$$MFR(t) = MFR(0)\times e\text{^}(-K\times t) \qquad (I)$$

$$\ln(K) = \alpha/T+\beta \qquad (II)$$

$$|\alpha| < 10000 \qquad \text{(III)}$$

(In the above formula (I), MFR(t) represents the MFR (210°C, load: 2160 g) of the resin after t days of storage, and MFR(0) represents the MFR (210°C, load: 2160 g) of the resin at start of storage. K is the MFR change rate coefficient, and t is an elapsed time (days) from the start of storage. In the above formula (II), T represents the storage temperature (K), and $\beta$ represents a constant term. In the above formula (II) and formula (III), $\alpha$ represents the temperature-dependent coefficient of the MFR change rate coefficient.)

An aspect 6 of the present invention relates to the acid-modified polyester-based resin according to the aspect 5, comprising:

at least one structural unit selected from structural units represented by the following general formulae (1) to (3).

[Chem. 1]

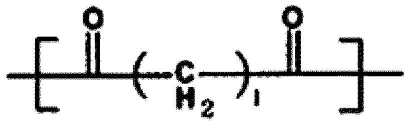

(1)

[In the formula (1), 1 is an integer of 2 to 8.]

[Chem. 2]

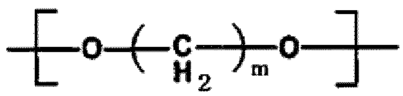

(2)

[In the formula (2), m is an integer of 2 to 10.]

[Chem. 3]

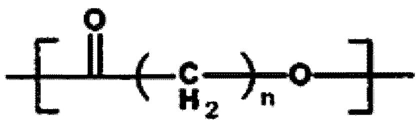

(3)

[In the formula (3), n is an integer of 2 to 9.]

An aspect 7 of the present invention relates to the acid-modified polyester-based resin according to the aspect 6, comprising:

at least one structural unit selected from the structural units represented by the general formulae (1) to (3) in a total amount of 50% by mole or more.

An aspect 8 of the present invention relates to the acid-modified polyester-based resin according to any one of the aspects 5 to 7, wherein

an $\alpha,\beta$-unsaturated carboxylic acid and/or an anhydride thereof (X) is grafted to a polyester-based resin.

An aspect 9 of the present invention relates to a biodegradable adhesive comprising:

the acid-modified polyester-based resin according to any one of the aspects 1 to 8.

An aspect 10 of the present invention relates to a laminate comprising:

at least one layer containing the acid-modified polyester-based resin according to any one of the aspects 1 to 8.

An aspect 11 of the present invention relates to a laminate comprising:

a polyvinyl alcohol-based resin (B) layer and a biodegradable resin (C) layer; and an adhesive layer between the above two layers, wherein

the adhesive layer contains the acid-modified polyester-based resin according to any one of the aspects 1 to 8.

## ADVANTAGEOUS EFFECTS OF INVENTION

The acid-modified polyester-based resin according to the present invention has excellent melt moldability and when used in, for example, the laminate including the PVA-based resin layer and the biodegradable resin layer as the adhesive layer between the two layers, a laminate having excellent appearance can be obtained.

In addition, the acid-modified polyester-based resin according to the present invention has excellent melt moldability and in which decrease in MFR during storage is suppressed. The acid-modified polyester-based resin according to the present invention is useful, for example, as the adhesive layer in the laminate including the PVA-based resin layer and the biodegradable resin layer between the two layers.

## DESCRIPTION OF EMBODIMENTS

Hereinafter, embodiments of the present invention will be specifically described, but the present invention is not limited to the following embodiments, and can be implemented with various modifications within the scope of a gist thereof.

In the present description, parts and percentages based on mass have the same meanings as parts and percentages based on weight, respectively.

In the present description, the expression "to" is used as an expression including numerical values or physical property values before and after the expression. That is, "A to B" means that it is A or more and B or less.

In the present description, "biodegradability" means that the conditions specified in JIS K 6953 -1:2011 (ISO 14855-1:2005) are satisfied.

An acid-modified polyester-based resin (A) according to the present invention includes the following first aspect.

An acid-modified polyester-based resin, in which an α,β-unsaturated carboxylic acid and/or an anhydride thereof (X) is grafted to an aliphatic-aromatic polyester-based resin containing an aliphatic diol unit, an aliphatic dicarboxylic acid unit, and an aromatic dicarboxylic acid unit,

> the acid-modified polyester-based resin has a melt flow rate (210°C, load: 2160 g) of 1.4 g/10 min to 15 g/10 min, and a content of the α,β-unsaturated carboxylic acid and/or an anhydride thereof (X) is 0.0001 to 0.8 parts by mass with respect to 100 parts by mass of the aliphatic-aromatic polyester-based resin.

In addition, the acid-modified polyester-based resin (A) according to the present invention includes the following second aspect.

An acid-modified polyester-based resin, in which a temperature-dependent coefficient α determined by plotting an MFR (melt flow rate) change rate coefficient K, which is calculated by plotting a change of an MFR over time during storage at a plurality of temperatures according to the following formula (I), for each storage temperature based on the following formula (II) satisfies the following formula (III).

$$MFR(t) = MFR(0)\times e\hat{}(-K\times t) \qquad (I)$$

$$\ln(K) = \alpha/T+\beta \qquad (II)$$

$$|\alpha| < 10000 \qquad (III)$$

(In the above formula (I), MFR(t) represents the MFR (210°C, load: 2160 g) of the resin after t days of storage, and MFR(0) represents the MFR (210°C, load: 2160 g) of the resin at start of storage. K is the MFR change rate coefficient, and t is an elapsed time (days) from the start of storage. In the above formula (II), T represents the storage temperature (K), and β represents a constant term. In the above formula (II) and formula (III), α represents the temperature-dependent coefficient of the MFR change rate coefficient.)

Hereinafter, the acid-modified polyester-based resin (A) according to the first aspect and the second aspect will be described.

### [Acid-modified Polyester-based Resin (A) According to First Aspect]

The acid-modified polyester-based resin (A) according to the first aspect of the present invention is an acid-modified polyester-based resin in which an α,β-unsaturated carboxylic acid and/or an anhydride thereof (X) is grafted to an aliphatic-aromatic polyester-based resin containing an aliphatic diol unit, an aliphatic dicarboxylic acid unit, and an aromatic dicarboxylic acid unit, the acid-modified polyester-based resin has a melt flow rate (210°C, load: 2160 g) of 1.4 g/10 min to 15 g/10 min, and a content of the α,β-unsaturated carboxylic acid and/or an anhydride thereof (X) is 0.0001 to

0.8 parts by mass with respect to 100 parts by mass of the aliphatic-aromatic polyester-based resin.

The acid-modified polyester-based resin (A) according to the first aspect of the present invention is an acid-modified polyester-based resin obtained by a graft reaction with an α,β-unsaturated carboxylic acid and/or an anhydride thereof (hereinafter, the α,β-unsaturated carboxylic acid and/or an anhydride thereof may be referred to as "α,β-unsaturated carboxylic acids") to an aliphatic-aromatic polyester-based resin.

The aliphatic-aromatic polyester-based resin contains an aliphatic diol unit, an aliphatic dicarboxylic acid unit, and an aromatic dicarboxylic acid unit. The biodegradability of the acid-modified polyester-based resin (A) is improved by including the above structural units in aliphatic-aromatic polyester-based resin.

In the acid-modified polyester-based resin (A) according to the first aspect of the present invention, the total content of the aliphatic diol unit, the aliphatic dicarboxylic acid unit, and the aromatic dicarboxylic acid unit is preferably 50% by mole or more, more preferably 70% by mole or more, and still more preferably 90% by mole or more.

Among them, the acid-modified polyester-based resin (A) according to the first aspect of the present invention preferably contains the aliphatic diol unit and the aliphatic dicarboxylic acid unit in an amount of 50% by mole or more.

When the acid-modified polyester-based resin (A) according to the first aspect of the present invention contains the aliphatic diol unit and the aliphatic dicarboxylic acid unit in a total amount of 50% by mole or more, the biodegradability is improved. The acid-modified polyester-based resin (A) according to the first aspect of the present invention contains the aliphatic diol unit and the aliphatic dicarboxylic acid unit more preferably contains in a total amount of 70% by mole or more, and still more preferably contains more preferably 90% by mole or more of in total.

As the aliphatic carboxylic acid unit, specifically, for example, the aliphatic carboxylic acid unit represented by the following general formula (1) is preferable. In addition, as the aliphatic diol unit, the aliphatic diol unit represented by the following general formula (2) is preferable.

[Chem. 4]

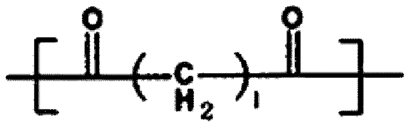

(1)

[In the formula (1), 1 is an integer of 2 to 8.]

[Chem. 5]

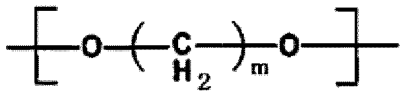

(2)

[In the formula (2), m is an integer of 2 to 10.]

In the above formula (1), 1 is an integer of 2 to 8, and preferably an integer of 3 to 5 from the viewpoint of moldability and flexibility.

In addition, in the above formula (2), m is an integer of 2 to 10, and preferably an integer of 3 to 5 from the viewpoint of moldability and flexibility.

The acid-modified polyester-based resin (A) according to the first aspect of the present invention is composed of structural units represented by the aliphatic diol unit, the aliphatic dicarboxylic acid unit, and the aromatic dicarboxylic acid unit. However other structural units may be included from the viewpoint of controlling heat resistance, strength, biodegradability, and the like.

The acid-modified polyester-based resin (A) according to the first aspect of the present invention containing the aliphatic diol unit, the aliphatic dicarboxylic acid unit, and the aromatic dicarboxylic acid unit can be obtained by subjecting at least one selected from the group consisting of an aliphatic dicarboxylic acid, an aliphatic diol compound, an alicyclic diol compound, an alicyclic dicarboxylic acid, an aromatic dicarboxylic acid, and other components to polycondensation by a known method and further to acid modification.

Examples of the aliphatic dicarboxylic acid include succinic acid, glutaric acid, adipic acid, 1,6-hexanedicarboxylic acid, azelaic acid, and sebacic acid, and in particular, adipic acid is preferred from the viewpoint of moldability and flexibility.

Examples of the aliphatic diol compound include ethylene glycol, propylene glycol, 1,4-butanediol, 1,5-pentanediol, 1,6-hexanediol, 1,7-heptanediol, 1,8-octanediol, 1,9-nonanediol, and 1,10-decanediol, and in particular, 1,4-butanediol is preferred from the viewpoint of moldability and flexibility.

Examples of the alicyclic diol compound include 1,3-cyclohexanediol and 1,4-cyclohexanediol, and in particular, 1,4-cyclohexanediol is preferred from the viewpoint of moldability and flexibility.

Examples of the alicyclic dicarboxylic acid include 1,3-cyclohexanedicarboxylic acid and 1,4-cyclohexanedicarboxylic acid, and in particular, 1,4-cyclohexanedicarboxylic acid is preferred from the viewpoint of moldability and flexibility.

Examples of the aromatic dicarboxylic acid include terephthalic acid, isophthalic acid, and furandicarboxylic acid, and in particular, terephthalic acid is preferred from the viewpoint of moldability. A derivative of the aromatic dicarboxylic acid may also be used.

In addition, specific examples of other components include: hydroxy acids such as 4-hydroxybutyric acid, 5-hydroxyvaleric acid, and 6-hydroxyhexanoic acid; dicarboxylic acids having less than two alkylene chains, such as oxalic acid and malonic acid, and a derivative thereof; hydroxycarboxylic acids having less than two alkylene chains, such as glycolic acid and lactic acid, and a derivative thereof; and other than these, those known as copolymerizable components of a polyester-based resin.

The acid-modified polyester-based resin (A) according to the first aspect of the present invention is an acid-modified polyester-based resin (A) obtained by a graft reaction of the α,β-unsaturated carboxylic acid and/or an anhydride thereof (X) to the above aliphatic-aromatic polyester-based resin (hereinafter, may be referred to as a raw material polyester-based resin (A')). The acid-modified polyester-based resin (A) has excellent adhesiveness.

Specific examples of the α,β-unsaturated carboxylic acids (X) include: α,β-unsaturated monocarboxylic acids such as acrylic acid and methacrylic acid; and α,β-unsaturated dicarboxylic acids or an anhydride thereof such as maleic acid, fumaric acid, itaconic acid, citrus acid, tetrahydrophthalic acid, crotonic acid, and isocrotonic acid. Preferably, an anhydride of an α,β-unsaturated dicarboxylic acid is used.

The present invention is not limited to the case where one type of α,β-unsaturated carboxylic acids (X) is used alone, and two or more types thereof may be used in combination.

The method for obtaining the acid-modified polyester-based resin (A) having the α,β-unsaturated carboxylic acids (X) grafted thereto, which is obtained by a graft reaction of the α,β-unsaturated carboxylic acids (X) to the raw material polyester-based resin (A'), is not particularly limited, and a known method can be used. The graft reaction can be carried out only by a thermal reaction, however, in order to increase the reactivity, it is preferable to use a radical initiator (Y). In addition, as a method for carrying out the reaction, a solution reaction, a reaction in a suspension, and a reaction in a molten state (melting method) without using a solvent and the like, can be adapted, however among them, the reaction is preferably carried out by a melting method.

Examples of a commercially available product of the raw material polyester-based resin (A') include "Ecoflex" manufactured by BASF Corporation, which contains a polycondensate of adipic acid/terephthalic acid/1,4-butanediol as a main component.

Hereinafter, the melting method will be described in detail.

As the melting method, a method in which the raw material polyester-based resin (A'), the α,β-unsaturated carboxylic acids (X), and the radical initiator (Y) are mixed in advance, and then, the resulting mixture is melt-kneaded in a kneader to carry out the reaction; a method in which the α,β-unsaturated carboxylic acids (X) and the radical initiator (Y) are blended in the raw material polyester-based resin (A') in a molten state in a kneader, and the like can be used.

As a mixer for use in mixing the raw materials in advance, for example, a Henschel mixer and a ribbon blender, or the like can be used. As the kneader for use in melt-kneading, for example, a single-screw or twin-screw extruder, a roll, a Banbury mixer, a kneader, and a Brabender mixer or the like can be used.

The temperature during the melt-kneading may be set appropriately to a temperature equal to or higher than the melting point of the raw material polyester-based resin (A') within a temperature range in which thermal degradation is not caused. The melt-kneading is performed at preferably 100°C to 250°C, and more preferably 160°C to 220°C.

When the graft reaction is carried out using a kneader, a screw rotation speed of the kneader is preferably 220 rpm to 800 rpm. When the screw rotation speed is within the above range, the MFR can be adjusted to a preferred range. The screw rotation speed is more preferably 250 rpm to 625 rpm, and still more preferably 350 rpm to 550 rpm.

When the graft reaction is carried out using a kneader, a screw diameter (D) of the kneader is preferably 3 mm to 500 mm. When the screw diameter (D) is within the above range, the production volume can be increased while suppressing the thermal degradation of the resin. The screw diameter (D) is more preferably 5 mm to 300 mm, still more preferably 10 mm to 200 mm, and particularly preferably 15 mm to 100 mm.

The screw diameter (D) generally refers to the outer diameter of the screw.

In addition, a ratio (L/D) of the screw diameter (D) to a screw length (L) is preferably within a range of 10 to 200. When the LID is within the above range, the production volume can be increased while suppressing the thermal degradation of the resin. The LID is more preferably 20 to 150, and still more preferably 25 to 100.

When the graft reaction is carried out using a kneader, the kneader may be provided with only one kneading unit where kneading is carried out, or may be provided with a plurality of kneading units.

In the first aspect of the present invention, a content of the α,β-unsaturated carboxylic acids (X) is in a range of

0.0001 to 0.8 parts by mass with respect to 100 parts by mass of the raw material polyester-based resin (A'), preferably 0.001 to 0.6 parts by mass, and more preferably 0.02 to 0.45 parts by mass.

When the content of the α,β-unsaturated carboxylic acids (X) is 0.0001 parts by mass or more with respect to 100 parts by mass of the raw material polyester-based resin (A'), a sufficient amount of polar groups is introduced into the aliphatic-aromatic polyester-based resin, and therefore, the sufficient interlayer adhesiveness, particularly the adhesion force to the PVA-based resin layer, can be obtained. In addition, when the content of the α,β-unsaturated carboxylic acids (X) is 0.8 parts by mass or less with respect to 100 parts by mass of the raw material polyester-based resin (A'), the α,β-unsaturated carboxylic acids (X) that have not undergone the graft reaction is less likely to remain in the resin, and therefore, poor appearance and the like due to the remaining α,β-unsaturated carboxylic acids can be prevented.

In addition, in the first aspect of the present invention, from the viewpoint of improving the efficiency of the graft reaction, it is preferable to contain the radical initiator (Y) during grafting. That is, the acid-modified polyester-based resin according to the first aspect of the present invention contains the radical initiator (Y) during grafting.

The radical initiator (Y) is not particularly limited, and any known radical initiator can be used. Examples thereof include organic and inorganic peroxides such as t-butyl hydroperoxide, cumene hydroperoxide, 2,5-dimethylhexane-2,5-dihydroperoxide, 2,5-dimethyl-2,5-bis(t-butyloxy)hexane, 3,5,5-trimethylhexanoyl peroxide, t-butyl peroxybenzoate, benzoyl peroxide, m-toluoyl peroxide, dicumyl peroxide, 1,3-bis(t-butylperoxyisopropyl)benzene, dibutyl peroxide, methyl ethyl ketone peroxide, potassium peroxide, and hydrogen peroxide; azo compounds such as 2,2'-azobisisobutyronitrile, 2,2'-azobis(isobutylamide)dihalide, 2,2'-azobis[2-methyl-N-(2-hydroxyethyl)propionamide], and azodi-t-butane; and carbon radical generators such as dicumyl.

These may be used alone or in combination of two or more thereof.

In the first aspect of the present invention, a content of the radical initiator (Y) is preferably in a range of 0.00001 to 5.0 parts by mass with respect to 100 parts by mass of the raw material polyester-based resin (A'), more preferably 0.0001 to 1.0 part by mass, and still more preferably 0.002 to 0.5 parts by mass is used.

When the content of the radical initiator (Y) is 0.00001 parts by mass or more with respect to 100 parts by mass of the raw material polyester-based resin (A'), the graft reaction proceeds sufficiently, and therefore, the effects of the present invention can be easily obtained. In addition, when the content of the radical initiator (Y) is 5.0 parts by mass or less, the molecular weight of the polyester-based resin is less likely to decrease due to degradation of the resin, and therefore, a lack of adhesive strength due to insufficient aggregability can be prevented.

A content ratio (Y'/X) of a radical (Y') obtained from the radical initiator (Y) to the α,β-unsaturated carboxylic acid and/or an anhydride thereof (X) is preferably 0.5 to 5 in molar ratio. When the Y'/X is within the range of 0.5 to 5, the α,β-unsaturated carboxylic acids (X) that have not undergone the graft reaction is less likely to remain in the resin, and therefore, poor appearance and the like due to the remaining α,β-unsaturated carboxylic acids can be prevented. The Y'/X is more preferably 0.6 to 4, still more preferably 0.7 to 3, and particularly preferably 0.8 to 2.

The amount of the radical (Y') obtained from the radical initiator (Y) is a theoretical value of a radical that can be generated from the radical initiator (Y).

The acid-modified polyester-based resin (A) according to the first aspect of the present invention has an MFR of 1.4 g/10 min to 15 g/10 min.

When the MFR of the acid-modified polyester-based resin (A) according to the first aspect of the present invention is less than 1.4 g/10 min, the fluidity decreases, and therefore, the appearance tends to be poor during multi-layer film formation. In addition, when the MFR of the acid-modified polyester-based resin (A) is 15 g/10 min or less, it prevents a large viscosity difference with other resins during multi-layer film formation, and therefore, the appearance can be improved during multi-layer film formation.

As the molecular weight of the acid-modified polyester-based resin (A) is smaller, the MFR is increased and the fluidity is improved. In the first aspect of the present invention, it is presumed that the effect of the present invention can be obtained by controlling the screw rotation speed during the graft reaction of the acid-modified polyester-based resin (A), controlling the shear in the extruder to reduce the molecular weight, and improving the fluidity of the acid-modified polyester resin (A).

From the viewpoint of the appearance during multi-layer film formation, the MFR is preferably 2 g/10 min to 10 g/10 min, and more preferably 3 g/10 min to 7 g/10 min.

A method for measuring the above MFR is described in detail below.

Measurement method

A melt indexer in accordance with JIS K 7210-1:2014 is used. 5 g of sample is charged into a cylinder set at 210°C and the charged within 30 seconds. A weight of 2160 g is placed on the sample 4 minutes and 30 seconds after the sample is charged, and strands extruded 5 minutes after the sample is charged are cut and discarded. Subsequently, the strands are cut 6 minutes, 7 minutes, and 8 minutes after the sample is charged, and a total of three strands are collected. The masses of the three collected strands are measured and the average is determined. The MFR is calculated based on the

average mass calculated using the following formula.

$$MFR\ (g/10\ min) = W\times 10$$

W: average mass (g) of three strands
10: coefficient for converting grams per minute to grams per 10 minutes

In order to set the above MFR within a specific range, for example, the following methods can be mentioned.

(i) A method of adjusting the screw rotation speed of the extruder during the graft reaction of the acid-modified polyester-based resin (A).
(ii) A method of adjusting the amount of the radical initiator (Y) used during the graft reaction of the acid-modified polyester-based resin (A).

Among them, the method (i) is preferred from the viewpoint of the efficiency of the graft reaction.
The weight average molecular weight of the acid-modified polyester-based resin (A) according to the first aspect of the present invention is preferably 5,000 to 500,000, more preferably 50,000 to 400,000, still more preferably 100,000 to 200,000, and particularly preferably 140,000 to 180,000. When the weight average molecular weight is 500,000 or less, it prevents that the melt viscosity is too high, and therefore, it is easy for melt-molding. In addition, when the weight average molecular weight is 5,000 or more, the resulting molded body can be prevented from being brittle.
The above weight average molecular weight is a weight average molecular weight in terms of a standard polystyrene molecular weight, and is measured by using two columns in series: TSKgel SuperMultipore HZ-M (exclusion limit molecular weight: 2 × 106, theoretical plate number: 16,000 plates/column, filler material: styrene-divinylbenzene copolymer, filler particle diameter: 4 μm) of high performance liquid chromatography ("HLC-8320GPC" manufactured by Tosoh Corporation).

[Acid-modified Polyester-based Resin (A) According to Second Aspect]

In the acid-modified polyester-based resin (A) according to the second aspect of the present invention, a temperature-dependent coefficient α determined by plotting an MFR change rate coefficient K, which is calculated by plotting an MFR change over time during storage at a plurality of temperatures according to the following formula (I), at each storage temperature based on the following formula (II) satisfies the following formula (III).

$$MFR(t) = MFR(0)\times e\text{\^{}}(-K\times t) \qquad (I)$$

$$\ln(K) = \alpha/T+\beta \qquad (II)$$

$$|\alpha| < 10000 \qquad (III)$$

(In the above formula (I), MFR(t) represents the MFR (210°C, load: 2160 g) of the resin after t days of storage, MFR(0) represents the MFR (210°C, load: 2160 g) of the resin at start of storage, and e is the base of the natural logarithm. K is the MFR change rate coefficient, and t is an elapsed time (days) from the start of storage. In the above formula (II), In represents the natural logarithm, T represents the storage temperature (K), and β represents a constant term. In the above formula (II) and formula (III), α represents the temperature-dependent coefficient of the MFR change rate coefficient.)
When the acid-modified polyester-based resin (A) according to the second aspect of the present invention satisfies the above condition, temperature dependency of a crosslinking reaction during storage is reduced, whereby a variation in MFR due to a difference in storage temperature is reduced, and thus excellent storage stability is obtained.
Here, the magnitude of |α| is an index of the storage stability, and when |α| is 10000 or more, the temperature dependency of the crosslinking reaction during storage increases, whereby the variation in MFR due to the difference in storage temperature is increased, and thus the storage stability decreases.
It is thought that when uniformity of the graft reaction in the acid-modified polyester-based resin (A) decreases, localization of the grafted polar group occurs. It is presumed that since the polar group not only acts as a starting point of the crosslinking reaction but also as a catalyst for hydrolysis, when the polar group is localized, terminal hydroxy groups generated by hydrolysis react immediately with a nearby polar group, thereby promoting the crosslinking reaction. It is presumed that since the abnormal crosslinking reaction is prevented by uniform modification, a rate of decrease in MFR

during high-temperature storage is reduced. Therefore, it is presumed that, for example, during the production of the acid-modified polyester-based resin (A), the temperature in the extruder is increased during the graft reaction to improve the fluidity of the resin, and the uniformity of the radical initiator and the $\alpha,\beta$-unsaturated carboxylic acid and/or an anhydride thereof in the kneading and further the uniformity of the graft reaction are improved to prevent the localization of the polar group, so that the effects of the present invention can be obtained.

In the above formula (III), the value of $|\alpha|$ is less than 10000, preferably 7000 or less, and more preferably 5000 or less, from the viewpoint of the fluidity of the resin after storage.

A method for determining the value of $|\alpha|$ based on the above formula (I) to (II) will be described in detail below.

The acid-modified polyester-based resin (A) is weighed to 10 g, and charged into an aluminum pouch, followed by storage in a heat-sealed state. The MFR at the start of storage is measured, then the resin is stored at any temperature, and the MFR after any time of storage is measured. Here, three or more samples are measured at an interval of 7 days or more within 100 days, including the start of storage, and the MFR of the resin after t days is defined as MFR(t). Further, the MFR(t) and the elapsed time t are plotted based on the formula (I), and the MFR change rate coefficient K is calculated by the least squares method. This K is calculated at four or more points among storage temperatures of 273.15K and 373.15K, with an interval of 5K or more. The storage temperature T and the MFR change rate coefficient K are plotted based on the formula (II), and the temperature-dependent coefficient $\alpha$ of the MFR change rate coefficient K is calculated by the least squares method.

[Method of Measuring MFR]

A melt indexer in accordance with JIS K 7210-1:2014 is used. 5 g of sample is charged into a cylinder set at 210°C and the charged within 30 seconds. A weight of 2160 g is placed on the sample 4 minutes and 30 seconds after the sample is charged, and strands extruded 5 minutes after the sample is charged are cut and discarded. Subsequently, the strands are cut 6 minutes, 7 minutes, and 8 minutes after the sample is charged, and a total of three strands are collected. The masses of the three collected strands are measured and the average is determined. The MFR is calculated based on the average mass calculated using the following formula.

$$\text{MFR (g/10 min)} = W \times 10$$

W: average mass (g) of three strands
10: coefficient for converting grams per minute to grams per 10 minutes

In order to obtain the acid-modified polyester-based resin (A) that satisfies the above formula (III), for example, the following methods can be mentioned.

(i) A method of adjusting a ratio (Q/N (kg/(hr-rpm))) of a discharge rate (Q (kg/hr)) to the screw rotation speed (N (rpm)) during the graft reaction.
(ii) A method of adjusting the set temperature of the extruder during the graft reaction.

Among them, the method (i) is preferred from the viewpoint of production efficiency.

The acid-modified polyester-based resin (A) according to the second aspect of the present invention preferably has at least one structural unit selected from structural units represented by the following general formulae (1) to (3).

[Chem. 6]

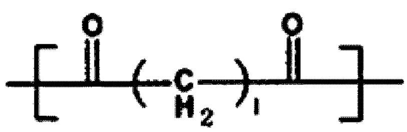

(1)

[In the formula (1), 1 is an integer of 2 to 8.]

[Chem. 7]

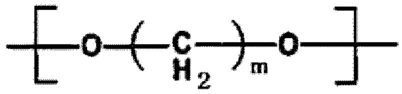

(2)

[In the formula (2), m is an integer of 2 to 10.]

[Chem. 8]

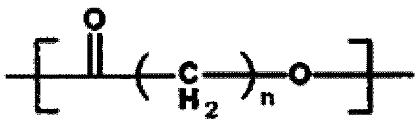

(3)

[In the formula (3), n is an integer of 2 to 9.]

In the above formula (1), 1 is an integer of 2 to 8, and preferably an integer of 3 to 5 from the viewpoint of moldability and flexibility.

In addition, in the above formula (2), m is an integer of 2 to 10, and preferably an integer of 3 to 5 from the viewpoint of moldability and flexibility.

Further, in the above formula (3), n is an integer of 2 to 9, and is preferably an integer of 3 to 5 from the viewpoint of moldability and flexibility.

The acid-modified polyester-based resin (A) according to the second aspect of the present invention is more preferably composed of at least one structural unit selected from the structural units represented by the above general formulae (1) to (3) from the viewpoint of biodegradability. However other structural units may be included for the purpose of controlling heat resistance, strength, biodegradability, and the like.

A total amount of at least one structural unit selected from the structural units represented by the above general formulae (1) to (3) is preferably 50% by mole or more, more preferably 70% by mole or more, and still more preferably 90% by mole or more.

In the case of having at least one structural unit selected from the structural units represented by the above general formulae (1) to (3), the acid-modified polyester-based resin (A) according to the second aspect of the present invention can be obtained by subjecting at least one selected from the group consisting of an aliphatic dicarboxylic acid, an aliphatic diol compound, an alicyclic diol compound, an alicyclic dicarboxylic acid, and other components to polycondensation by a known method and further to acid modification.

Examples of the aliphatic dicarboxylic acid include succinic acid, glutaric acid, adipic acid, 1,6-hexanedicarboxylic acid, azelaic acid, and sebacic acid, and in particular, adipic acid is preferred from the viewpoint of moldability and flexibility.

Examples of the aliphatic diol compound include ethylene glycol, propylene glycol, 1,4-butanediol, 1,5-pentanediol, 1,6-hexanediol, 1,7-heptanediol, 1,8-octanediol, 1,9-nonanediol, and 1,10-decanediol, and in particular, 1,4-butanediol is preferred from the viewpoint of moldability and flexibility.

Examples of the alicyclic diol compound include 1,3-cyclohexanediol and 1,4-cyclohexanediol, and in particular, 1,4-cyclohexanediol is preferred from the viewpoint of moldability and flexibility.

Examples of the alicyclic dicarboxylic acid include 1,3-cyclohexanedicarboxylic acid and 1,4-cyclohexanedicarboxylic acid, and in particular, 1,4-cyclohexanedicarboxylic acid is preferred from the viewpoint of moldability and flexibility.

In adtion, specific examples of other components include: hydroxy acids such as 4-hydroxybutyric acid, 5-hydroxyvaleric acid, and 6-hydroxyhexanoic acid; aromatic dicarboxylic acids such as terephthalic acid, isophthalic acid, and furandicarboxylic acid, and a derivative thereof; dicarboxylic acids having less than two alkylene chains, such as oxalic acid and malonic acid, and a derivative thereof; hydroxycarboxylic acids having less than two alkylene chains, such as glycolic acid and lactic acid, and a derivative thereof; and other than these, those known as copolymerizable components of a polyester-based resin.

The weight average molecular weight of acid-modified polyester-based resin (A) according to the second aspect of the present invention is preferably 5,000 to 500,000, more preferably 50,000 to 400,000, still more preferably 100,000 to 200,000, and particularly preferably 140,000 to 180,000. When the weight average molecular weight is 500,000 or less, the melt viscosity is not too high, and therefore, it is easy for melt-molding. In addition, when the weight average molecular weight is 5,000 or more, the resulting molded body can be prevented from being brittle.

The above weight average molecular weight is a weight average molecular weight in terms of a standard polystyrene molecular weight, and is measured by using two columns in series: TSKgel SuperMultipore HZ-M (exclusion limit molecular weight: 2 × 106, theoretical plate number: 16,000 plates/column, filler material: styrene-divinylbenzene copolymer, filler particle diameter: 4 μm) of high performance liquid chromatography ("HLC-8320GPC" manufactured by

Tosoh Corporation).

The acid-modified polyester-based resin (A) according to the second aspect of the present invention is an acid-modified polyester-based resin (A) obtained by grafting an α,β-unsaturated carboxylic acid and/or an anhydride thereof (hereinafter, the α,β-unsaturated carboxylic acid and/or an anhydride thereof may be referred to as "α,β-unsaturated carboxylic acids") to a raw material polyester-based resin (A'), is good in adhesiveness.

Specific examples of the α,β-unsaturated carboxylic acids include: α,β-unsaturated monocarboxylic acids such as acrylic acid and methacrylic acid; and α,β-unsaturated dicarboxylic acids or an anhydride thereof such as maleic acid, fumaric acid, itaconic acid, citrus acid, tetrahydrophthalic acid, crotonic acid, and isocrotonic acid. Preferably, an anhydride of an α,β-unsaturated dicarboxylic acid is used.

The present invention is not limited to the case where one type of α,β-unsaturated carboxylic acids is used alone, and two or more types thereof may be used in combination.

The method for obtaining the acid-modified polyester-based resin (A) having the α,β-unsaturated carboxylic acids grafted thereto, which is obtained by a graft reaction of the α,β-unsaturated carboxylic acids to the raw material polyester-based resin (A'), is not particularly limited, and a known method can be used. The graft reaction can be carried out only by a thermal reaction, however, in order to increase the reactivity, it is preferable to use a radical initiator. In addition, as a method for carrying out the reaction, a solution reaction, a reaction in a suspension, and a reaction in a molten state (melting method) without using a solvent and the like, can be adapted, however among them, the reaction is preferably carried out by a melting method.

Examples of a commercially available product of the raw material polyester-based resin (A') include "Ecoflex" manufactured by BASF Corporation, which contains a polycondensate of adipic acid/terephthalic acid/1,4-butanediol as a main component, and "BioPBS" manufactured by Mitsubishi Chemical Group Corporation, which contains a polycondensate of succinic acid/1,4-butanediol as a main component.

Hereinafter, the melting method will be described in detail.

As the melting method, a method in which the raw material polyester-based resin (A'), the α,β-unsaturated carboxylic acids, and the radical initiator are mixed in advance, and then, the resulting mixture is melt-kneaded in a kneader to carry out the reaction; a method in which the α,β-unsaturated carboxylic acids and the radical initiator are blended in the polyester-based resin (A') in a molten state in a kneader, and the like can be used.

As a mixer for use in mixing the raw materials in advance, for example, a Henschel mixer and a ribbon blender, or the like can be used. As the kneader for use in melt-kneading, for example, a single-screw or twin-screw extruder, a roll, a Banbury mixer, a kneader, and a Brabender mixer or the like can be used.

In the second aspect of the present invention, the temperature during the melt-kneading may be set appropriately to a temperature equal to or higher than the melting point of the raw material polyester-based resin (A') within a temperature range in which thermal degradation is not caused. As temperature setting during melt-kneading, the melt-kneading is performed at preferably 100°C to 250°C, and more preferably 160°C to 220°C.

When the graft reaction is carried out using a kneader, a screw rotation speed N of the kneader is preferably 100 rpm to 700 rpm. When the screw rotation speed N is within the above range, the uniformity of the graft reaction can be improved. The screw rotation speed N is more preferably 200 rpm to 600 rpm, and still more preferably 300 rpm to 500 rpm.

During the graft reaction, a discharge rate Q of the kneader is preferably 200 kg/hr to 800 kg/hr. When the discharge rate Q is within the above range, the uniformity of the graft reaction can be improved. The discharge rate Q is more preferably 300 kg/hr to 700 kg/hr, and still more preferably 400 kg/hr to 600 kg/hr.

In addition, the ratio (Q/N) of the discharge rate Q to the screw rotation speed N during the graft reaction is preferably 1.20 or more. When the Q/N is 1.20 or more, the uniformity of the graft reaction can be improved. The Q/N is preferably 1.21 or more, more preferably 1.22 or more, still more preferably 1.23 or more, and particularly preferably 1.24 or more. In addition, from the viewpoint of production, the Q/N is preferably 3.00 or less, more preferably 2.50 or less, still more preferably 2.00 or less, and particularly preferably 1.50 or less.

When the graft reaction is carried out using a kneader, the kneader may be provided with only one kneading unit where kneading is carried out, or may be provided with a plurality of kneading units.

In the second aspect of the present invention, a blend amount of the α,β-unsaturated carboxylic acids is preferably in the range from 0.0001 to 5 parts by mass with respect to 100 parts by mass of the raw material polyester-based resin (A'), more preferably 0.001 to 1 part by mass, and still more preferably 0.02 to 0.45 parts by mass is used. When the blended amount thereof is 0.0001 parts by mass or more, a sufficient amount of polar groups is introduced into the polyester-based resin (A'), and therefore, the interlayer adhesiveness, particularly the adhesion force to a PVA-based resin layer can be obtained. In addition, when the blended amount thereof is 5 parts by mass or less, the α,β-unsaturated carboxylic acids that have not undergone the graft reaction is less likely to remain in the resin, and therefore, poor appearance and the like due to the remaining α,β-unsaturated carboxylic acids can be prevented.

The radical initiator is not particularly limited, and any known radical initiator can be used. Examples thereof include organic or inorganic peroxides such as t-butyl hydroperoxide, cumene hydroperoxide, 2,5-dimethylhexane-2,5-dihydroperoxide, 2,5-dimethyl-2,5-bis(t-butyloxy)hexane, 3,5,5-trimethylhexanoyl peroxide, t-butyl peroxybenzoate,

benzoyl peroxide, m-toluoyl peroxide, dicumyl peroxide, 1,3-bis(t-butylperoxyisopropyl)benzene, dibutyl peroxide, methyl ethyl ketone peroxide, potassium peroxide, and hydrogen peroxide; azo compounds such as 2,2'-azobisisobutyronitrile, 2,2'-azobis(isobutylamide)dihalide, 2,2'-azobis[2-methyl-N-(2-hydroxyethyl)propionamide], and azodi-t-butane; and carbon radical generators such as dicumyl.

These may be used alone or in combination of two or more thereof.

A blend amount of the radical initiator is preferably in a range of 0.00001 to 5.0 parts by mass with respect to 100 parts by mass of the raw material polyester-based resin (A'), more preferably 0.0001 to 1.0 part by mass, and still more preferably 0.002 to 0.5 parts by mass.

When the blended amount of the radical initiator is 0.00001 parts by mass or more, the graft reaction is sufficiently carried out, and therefore the effects of the present invention is easily obtained. When the blended amount of the radical initiator is 5.0 parts by mass or less, the molecular weight of the polyester-based resin is less likely decreased due to the degradation, and therefore, a lack of adhesive strength due to low aggregability can be prevented.

The acid-modified polyester-based resins according to the first and second aspects of the present invention can be suitably used as a biodegradable adhesive. That is, biodegradable adhesives according to the first and second aspects of the present invention contain the acid-modified polyester-based resin according to the present invention.

The acid-modified polyester-based resin (A) according to the first and second aspects of the present invention can be particularly suitably used as an adhesive composition for a laminate. For example, it is used as an adhesive layer when laminating a PVA-based resin (B) layer and a biodegradable resin (C) layer, in which surface physical properties are different.

Hereinafter, the PVA-based resin (B) layer and the biodegradable resin (C) layer constituting the laminate will be described.

[PVA-based Resin (B) Layer]

The PVA-based resin (B) layer is preferably used as a gas barrier layer of a laminate according to the present invention described later, and particularly preferably has the gas barrier property of the laminate according to the present invention.

The PVA-based resin (B) layer is preferably laminated on at least one surface of a biodegradable resin (C) layer described later via a layer (adhesive layer) containing the acid-modified polyester-based resin (A) according to the present invention described above.

The PVA-based resin (B) layer for use in the present invention is a layer containing a PVA-based resin (B) as a main component, and preferably contains the PVA-based resin (B) in an amount of 70 % by mass or more, more preferably 80 % by mass or more, and still more preferably 90 % by mass or more. The upper limit is 100 % by mass. When the content is 70 % by mass or more, sufficient gas barrier properties can be obtained.

The PVA-based resin (B) for use in the present invention is a resin containing as a main structural unit, a vinyl alcohol structural unit, which is obtained by saponification of a polyvinyl ester-based resin obtained by polymerizing a vinyl ester-based monomer, and is composed a vinyl alcohol structural unit in an amount equivalent to a degree of saponification and a vinyl ester structural unit.

Examples of the vinyl ester-based monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. However, it is preferred to use vinyl acetate from the economical viewpoint.

The average polymerization degree (obtained by measurement according to JIS K 6726) of the PVA-based resin (B) for use in the present invention is preferably from 200 to 1800, more preferably 300 to 1500, and still more preferably 300 to 1000.

When the average polymerization degree thereof is 200 or more, the mechanical strength of the PVA-based resin (B) layer is sufficient. In addition, when the average polymerization degree is 1800 or less, in the case where the PVA-based resin (B) layer is formed by thermal melt-molding, a decrease in fluidity can be prevented to improve the moldability. Further, occurrence of abnormal shear heat during molding can be prevented, and thus, the PVA-based resin (B) is less likely to be thermal degraded.

In addition, a degree of saponification (obtained by measurement according to JIS K 6726) of the PVA-based resin (B) for use in the present invention is preferably 80% by mole to 100% by mole, more preferably 90% by mole to 99.9% by mole, and still more preferably 98% by mole to 99.9% by mole.

When the degree of saponification is 80% by mole or more, the gas barrier properties are improved.

Further, in the present invention, as the PVA-based resin (B), a PVA-based resin obtained by copolymerizing various monomers during production of the polyvinyl ester-based resin, followed by saponification, or a various modified PVA-based resins obtained by introducing various functional groups by post-modification into an unmodified PVA can be used.

Examples of the monomer for use in copolymerization with the vinyl ester-based monomer include olefins such

as ethylene, propylene, isobutylene, α-octene, α-dodecene, and α-octadecene; hydroxy group-containing α-olefins such as 3-buten-1-ol, 4-penten-1-ol, 5-hexen-1-ol, and 3,4-dihydroxy-1-butene, and derivatives such as an acylated product thereof; unsaturated acids such as acrylic acid, methacrylic acid, crotonic acid, maleic acid, maleic anhydride, and itaconic acid, and salts thereof, monoesters thereof, or dialkyl esters thereof; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid, or salts thereof; vinyl compounds such as alkyl vinyl ethers, dimethylallyl vinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; substituted vinyl acetates such as isopropenyl acetate and 1-methoxyvinyl acetate; vinylidene chloride; 1,4-diacetoxy-2-butene; and vinylene carbonate.

Further, examples of the modified PVA-based resin obtained by introduction of functional groups by post-modification include a resin having an acetoacetyl group introduced by a reaction with a diketene, a resin having a polyalkylene oxide group introduced by a reaction with ethylene oxide, a resin having a hydroxyalkyl group introduced by a reaction with an epoxy compound or the like, or a resin obtained by reacting an aldehyde compound having any of various functional groups with PVA.

The content of the modification species in the modified PVA-based resin, that is, a structural units derived from each type of monomers in the copolymer or functional groups introduced by post-reaction, is preferably in a range from 1% by mole to 20% by mole, and more preferably 2% by mole to 10% by mole, although it cannot be generalized since the properties differ greatly depending on the modification species.

Among these various modified PVA-based resins, in the present invention, a PVA-based resin with a structural unit having a 1,2-diol structure in its side chain (hereinafter, may be referred to as a "1,2-diol structural unit") represented by the following general formula (4) is preferably used in a method for producing the laminate according to the present invention to be described later from the viewpoint of ease of melt-molding.

[Chem. 9]

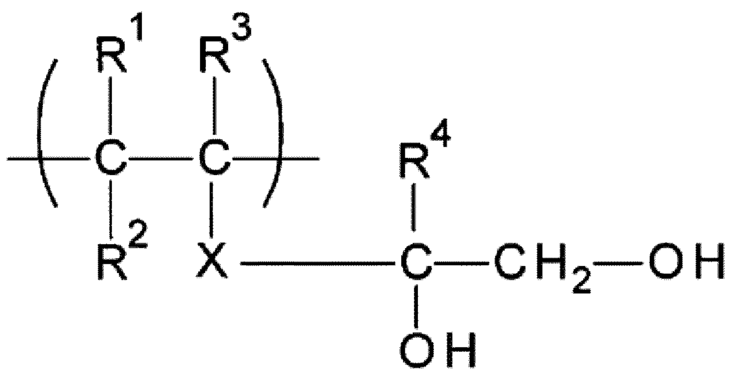

(4)

Each of $R^1$ to $R^4$ in the 1,2-diol structural unit represented by the general formula (4) independently represent a hydrogen atom or a linear or branched alkyl group having 1 to 4 carbon atoms.

Examples of the alkyl group include a methyl group, an ethyl group, a n-propyl group, an isopropyl group, a n-butyl group, an isobutyl group, and a tert-butyl group. The alkyl group may have a functional group such as a halogen group, a hydroxy group, an ester group, a carboxylic acid group or a sulfonic acid group, if necessary.

In addition, X in the 1,2-diol structural unit represented by the general formula (4) represents a single bond or a bond chain.

Examples of the bond chain include hydrocarbons (which may be substituted with halogens such as fluorine, chlorine, and bromine, or the like) such as a linear or branched alkylene group having 1 to 6 carbon atoms, a linear or branched alkenylene group having 1 to 6 carbon atoms, a linear or branched alkynylene group having 1 to 6 carbon atoms, a phenylene group, and a naphthylene group, and also include -O-, $-(CH_2O)_t-$, $-(OCH_2)_t-$, $-(CH_2O)_tCH_2-$, -CO-, -COCO-, $-CO(CH_2)_tCO-$, $-CO(C_6H_4)CO-$, -S-, -CS-, -SO-, $-SO_2-$, -NR-, -CONR-, -NRCO-, -CSNR-, -NRCS-, -NRNR-, $-HPO_4-$, $-Si(OR)_2-$, $-OSi(OR)_2-$, $-OSi(OR)_2O-$, $-Ti(OR)_2-$, $-OTi(OR)_2-$, $-OTi(OR)_2O-$, -Al(OR)-, -OAl(OR)-, and -OAl(OR)O- (in which each R is independently any substituent, and represents a hydrogen atom or a linear or branched alkyl group having 1 to 6 carbon atoms, and t represents an integer of 1 to 5).

Among them, a linear or branched alkylene group having 1 to 6 carbon atoms, particularly a methylene group or $-CH_2OCH_2-$ is preferred, from the viewpoint of stability during production or use.

X is most preferably a single bond from the viewpoint of thermal stability and stability under high temperature or acidic conditions.

Among the 1,2-diol structural unit represented by the general formula (4), a structural unit represented by the

following general formula (4'), in which $R^1$ to $R^4$ are all hydrogen atoms and X is a single bond, is most preferred.

[Chem. 10]

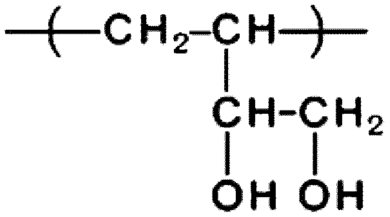

(4')

Examples of a method for producing a PVA-based resin having the 1,2-diol structural unit in the side chain include a method described in paragraphs [0026] to [0034] of JP2015-143356A.

A content of the 1,2-diol structural unit contained in the PVA-based resin having the 1,2-diol structural unit in the side chain is preferably 1% by mole to 20% by mole, more preferably 2% by mole to 10% by mole, and still more preferably 3% by mole to 8% by mole. When the content is 1% by mole or more, the effect of the 1,2-diol structure in the side chain is sufficiently obtained, and when the content is 20% by mole or less, a decrease in gas barrier properties at a high humidity can be prevented.

The content of the 1,2-diol structural unit in the PVA-based resin can be determined based on a $^1$H-NMR spectrum (solvent: DMSO-d6, internal standard substance: tetramethylsilane) of a completely saponified PVA-based resin. The content thereof may be calculated based on peak areas derived from a hydroxy proton, a methine proton, and a methylene proton in the 1,2-diol structural unit, a methylene proton in the main chain, a proton of a hydroxy group linked to the main chain, and the like.

In addition, the PVA-based resin (B) for use in the present invention may be composed of one kind, or may be a mixture of two or more kinds. When the PVA-based resin (B) is a mixture of two or more kinds, a combination of the above unmodified PVAs; an unmodified PVA with a PVA-based resin having the structural unit represented by the general formula (4), PVA-based resins each having the structural unit represented by the general formula (4) but having different degrees of saponification, degrees of polymerization, or degrees of modification or the like; an unmodified PVA or a PVA-based resin having the structural unit represented by the general formula (4) with another modified PVA-based resin can be used.

In addition, the PVA-based resin (B) layer for used in the present invention may be blended with a heat stabilizer, an antioxidant, a UV absorber, a crystal nucleating agent, an antistatic agent, a flame retardant, a plasticizer, a lubricant, a filler, a lubricant, and a crystal nucleating agent or the like, other than the PVA-based resin (B).

[Biodegradable Resin (C) Layer]

Next, the biodegradable resin (C) layer which is preferably used as an outer layer of the laminate according to the present invention, to be described later, will be described. The biodegradable resin (C) layer is a layer containing a biodegradable resin (C) as a main component, and preferably contains the biodegradable resin (C) in an amount of 70 % by mass or more, more preferably 80 % by mass or more, and still more preferably 90 % by mass or more. The upper limit is 100 % by mass.

Examples of the biodegradable resin (C) include: aliphatic polyesters such as a polylactic acid (C1), a polycondensate of adipic acid/terephthalic acid/1,4-butanediol (polybutylene adipate terephthalate (C2)), a polycondensate of succinic acid/1,4-butanediol/lactic acid, and polyglycolic acid; modified starch; casein plastics; and cellulose. These may be used alone or in combination of two or more kinds thereof.

Among them, a polylactic acid (C1) and polybutylene adipate terephthalate (C2) are preferred from the viewpoint of strength. Further, a mixture (C3) of the polylactic acid (C1) and the polybutylene adipate terephthalate (C2) is preferred from the viewpoint of adhesiveness and strength.

The polylactic acid (C1) is an aliphatic polyester-based resin containing a lactic acid structural unit as a main component, and is a polymer containing, as a raw material, L-lactic acid, D-lactic acid, or a cyclic dimer thereof, L-lactide, D-lactide, or DL-lactide.

The polylactic acid (C1) for use in the present invention is preferably a homopolymer of these lactic acids, but may contain copolymerization components other than lactic acids in an amount that does not impair the properties, for example, 10% by mole or less.

Examples of the copolymerization component include: aliphatic hydroxycarboxylic acids such as glycolic acid, 3-hydroxybutyric acid, 4-hydroxybutyric acid, 3-hydroxyvaleric acid, 4-hydroxyvaleric acid, and 6-hydroxycaproic acid; lactones such as caprolactone; aliphatic diols such as ethylene glycol, diethylene glycol, triethylene glycol, polyethylene

glycol, propylene glycol, and 1,4-butanediol; and aliphatic dibasic acids such as succinic acid, oxalic acid, malonic acid, glutaric acid, and adipic acid.

In addition, a content ratio of a L-lactic acid component to a D-lactic acid component in the polylactic acid (C1) (the mass of the L-lactic acid component / the mass of the D-lactic acid component) is preferably 95/5 or more, more preferably 99/1 or more, and still more preferably 99.8/0.2 or more is preferably used. As the value is increased, the melting point is increased to improve the heat resistance. On the other hand, as the value is decreased, the melting point tends to increase, and therefore, the heat resistance tends to be insufficient.

Specifically, in the case of a homopolymer of the polylactic acid (C1), the homopolymer has a melting point of 152°C when the content ratio is 95/5, 171°C when the content ratio is 99/1, and 175°C or higher when the content ratio is 99.8/0.2

Further, the polylactic acid (C1) for use in the present invention has a weight average molecular weight of preferably 20,000 to 1,000,000, more preferably 30,000 to 300,000, and still more preferably 40,000 to 200,000. When the weight average molecular weight is 1,000,000 or less, the melt viscosity during thermal melt-molding can be prevented from being excessively high, and therefore, good film formability can be obtained. In addition, when the weight average molecular weight is 20,000 or more, the obtained laminate has sufficient mechanical strength.

The weight average molecular weight can be measured by size exclusion chromatography (GPC, gel permeation chromatography) as polystyrene equivalent amount according to ISO 16014-1:2012 and ISO 16014-3:2012 standards using tetrahydrofuran as an eluent and a column (polystyrene gel) heated to 40°C.

Examples of a commercially available product of the polylactic acid (C1) include "Ingeo" manufactured by Nature Works LLC, "Lacea" manufactured by Mitsui Chemicals, Inc., "REVODE" manufactured by Zhejiang Hisun Biomaterials Co., Ltd., and "VYLOECOL" manufactured by TOYOBO CO., LTD.

The polybutylene adipate terephthalate (C2) is obtained by polycondensation of adipic acid, terephthalic acid, and 1,4-butanediol.

The content of adipic acid in the polybutylene adipate terephthalate (C2) is preferably 10% by mole to 50% by mole, and more preferably 15% by mole to 40% by mole.

The content of terephthalic acid in the polybutylene adipate terephthalate (C2) is preferably 5% by mole to 45% by mole, and more preferably 8% by mole to 35% by mole.

The content of 1,4-butanediol in the polybutylene adipate terephthalate (C2) is preferably 5% by mole to 45% by mole, and more preferably 10% by mole to 30% by mole.

When the contents of each components are within the above range, workability and corrosion resistance are improved.

The polybutylene adipate terephthalate (C2) has a weight average molecular weight of preferably 3,000 to 1,000,000, more preferably 20,000 to 600,000, and still more preferably 50,000 to 400,000.

The weight average molecular weight can be measured by size exclusion chromatography (GPC, gel permeation chromatography) as polystyrene equivalent amount according to ISO 16014-1:2012 and ISO 16014-3:2012 standards using tetrahydrofuran as an eluent and a column (polystyrene gel) heated to 40°C.

When the weight average molecular weight is 3,000 or more, the production becomes easy, and when the weight average molecular weight is 1,000,000 or less, the melt viscosity decreases and the moldability is improved.

The polybutylene adipate terephthalate (C2) may contain other copolymerization components in addition to adipic acid, terephthalic acid, and 1,4-butanediol.

Examples of other copolymerization components include: dihydroxy compounds such as diethylene glycol, triethylene glycol, polyethylene glycol, polypropylene glycol, and polytetrahydrofuran (poly-THF); glycolic acid, D-lactic acid, L-lactic acid, D,L-lactic acid, and 6-hydroxyhexanoic acid, and a cyclic derivative thereof, for example, glycolide (1,4-dioxane-2,5-dione), D-dilactide, and L-dilactide (3,6-dimethyl-1,4-dioxane-2,5-dione); and hydroxycarboxylic acids such as p-hydroxybenzoic acid and an oligomer and a polymer of p-hydroxybenzoic acid.

The content of the other copolymerization components is about 0.1% by mole to 30% by mole of the entire polybutylene adipate terephthalate (C2).

In addition, the mixture (C3) of the polylactic acid (C1) and the polybutylene adipate terephthalate (C2) can also be used.

As a mixing ratio, polylactic acid/polybutylene adipate terephthalate (mass ratio) is preferably 10/90 to 90/10, and more preferably 20/80 to 60/40.

In addition, in the biodegradable resin (C) layer for used in the present invention, a heat stabilizer, an antioxidant, a UV absorber, a crystal nucleating agent, an antistatic agent, a flame retardant, a plasticizer, a lubricant, a filler, a lubricant, and a crystal nucleating agent, or the like may be blended, other than the biodegradable resin (C).

[Laminate]

The laminate according to the present invention includes at least one layer containing the acid-modified

polyester-based resin (A) according to the present invention (hereinafter, may be referred to as an "acid-modified polyester-based resin (A) layer").

The acid-modified polyester-based resin (A) layer is a layer containing the acid-modified polyester-based resin (A) as a main component, and preferably contains the acid-modified polyester-based resin (A) in an amount of 70 % by mass or more, more preferably 80 % by mass or more, and still more preferably 90 % by mass or more. The upper limit is 100 % by mass.

The acid-modified polyester-based resin (A) layer for use in the present invention may contain a heat stabilizer, an antioxidant, a UV absorber, a crystal nucleating agent, an antistatic agent, a flame retardant, a plasticizer, a lubricant, a filler lubricant, and a crystal nucleating agent, or the like, other than the acid-modified polyester-based resin (A) according to the first aspect or the second aspect of the present invention.

The laminate according to the present invention preferably includes the biodegradable resin (C) layer as a layer other than the acid-modified polyester-based resin (A) layer.

Among them, the laminate according to the present invention preferably uses the PVA-based resin (B) layer as a gas barrier layer and the biodegradable resin (C) layer as an outer layer.

In addition, the laminate according to the present invention is a laminate provided with an adhesive layer between the PVA-based resin (B) layer and the biodegradable resin (C) layer, and the adhesive layer preferably contains the acid-modified polyester-based resin (A) according to the present invention. The laminate preferably has a layer structure of 3 to 15 layers, more preferably 3 to 7 layers, and particularly preferably 5 to 7 layers.

The configuration of the laminate according to the present invention is not particularly limited. When the biodegradable resin (C) layer is defined as c, the PVA-based resin (B) layer is defined as b, and the acid-modified polyester-based resin (A) layer (adhesive layer) is defined as a, any combination of c/a/b, c/a/b/a/c, and c/b/a/b/a/b/c is possible. In a case where the laminate includes a plurality of biodegradable resin (C) layers, the plurality of biodegradable resin (C) layers may be the same as or different from each other. The same applies to a case where the laminate includes a plurality of PVA-based resin (B) layers and a case where the laminate includes a plurality of acid-modified polyester-based resin (A) layers.

Generally, in order to prevent a decrease in gas barrier properties due to moisture absorption of the PVA-based resin (B) layer, it is preferable that the PVA resin (B) layer has a layer structure in which the biodegradable resin (C) layer is provided in a portion in contact with outside air or contents containing moisture.

The laminate according to the present invention preferably has the thickness of a range from 1 μm to 30,000 μm, more preferably, a range from 3 μm to 13,000 μm, and a range from 10 μm to 3,000 μm is still more preferably used.

As thickness of each layer constituting the laminate, the acid-modified polyester-based resin (A) layer (adhesive layer) has a thickness of preferably from 0.1 μm to 500 μm, more preferably from 0.15 μm to 250 μm, and particularly preferably from 0.5 μm to 50 μm. When the thickness of the acid-modified polyester-based resin (A) layer is 500 μm or less, the appearance is good. In addition, when the thickness of the acid-modified polyester-based resin (A) layer is 0.1 μm or more, a decrease in adhesion force can be prevented.

The PVA-based resin (B) layer has a thickness of preferably from 0.1 μm to 1,000 μm, more preferably from 0.3 μm to 500 μm, and still preferably from 1 μm to 100 μm. When the thickness of the PVA-based resin (B) layer is 1,000 μm or less, the laminate can be prevented from being hard and brittle. In addition, when the thickness of the PVA-based resin (B) layer is 0.1 μm or more, the gas barrier properties are improved.

The biodegradable resin (C) layer has a thickness of preferably from 0.4 μm to 14,000 μm, more preferably from 1 μm to 6,000 μm, and particularly preferably from 4 μm to 1,400 μm. When the thickness of the biodegradable resin (C) layer is 14,000 μm or less, the laminate can be prevented from being too hard. In addition, when the thickness of the biodegradable resin (C) layer is 0.4 μm or more, the laminate can be prevented from being brittle.

When there are a plurality of layers of each layer, as for the ratio of the thickness of the biodegradable resin (C) layer to the thickness of the PVA-based resin (B) layer (the thickness of the biodegradable resin (C) layer / the thickness of the PVA-based resin (B) layer), the ratio of the sum of the thicknesses of the biodegradable resin (C) layers to the sum of the thicknesses of the PVA resin (B) layers is preferably from 1 to 100, and more preferably from 2.5 to 50. When the ratio is 100 or less, the barrier properties are improved, and when the ratio is 1 or more, the laminate can be prevented from being hard and brittle.

In addition, when there are a plurality of the acid-modified polyester-based resin (A) layers (adhesive layers), as for the ratio of the thickness of the laminate according to the present invention to the thickness of the acid-modified polyester-based resin (A) layer (adhesive layer) (the thickness of the acid-modified polyester-based resin (A) layer / the thickness of the laminate according to the present invention), the ratio of the sum of the thicknesses of the acid-modified polyester resin (A) layers to the thickness of the laminate of the present invention is preferably from 0.005 to 0.5, and more preferably from 0.01 to 0.3. When the ratio is 0.5 or less, the appearance is improved, and when the ratio is 0.005 or more, the adhesion force is increased.

The laminate produced using the acid-modified polyester-based resin according to the first aspect of the present invention preferably has a uniform thickness. Specifically, a coefficient of variation of the thickness of the laminate is

preferably 0.5 or less. When the coefficient of variation of the thickness of the laminate is 0.5 or less, defects in appearance after stretching treatment can be prevented. The coefficient of variation of the thickness of the laminate is more preferably 0.3 or less, still more preferably 0.2 or less, and particularly preferably 0.1 or less.

The coefficient of variation of the thickness of the laminate can be measured by the method described in Examples to be described later. Examples of a method of adjusting the coefficient of variation of the thickness of the laminate within the above range include a method of adjusting the fluidity of the resin in each layer, and a method of adjusting the pressure at the time of the resins of the layers merging.

The laminate according to the present invention can be produced by a known molding method, and specifically, a melt molding method or a molding method in a solution state can be used.

Examples of the melt molding method include a method of sequentially or simultaneously subjecting the acid-modified polyester-based resin (A) and the PVA-based resin (B) to melt extrusion lamination on a film or sheet of the biodegradable resin (C), conversely, a method of sequentially or simultaneously subjecting the acid-modified polyester-based resin (A) and the biodegradable resin (C) to melt extrusion lamination on a film or sheet of the PVA-based resin (B), or a method of co-extruding the biodegradable resin (C), the acid-modified polyester-based resin (A), and the PVA-based resin (B).

Further, examples of the molding method in a solution state include a method of solution coating a film or sheet of the biodegradable resin (C) with a solution of the acid-modified polyester-based resin (A) dissolved in a good solvent, followed by drying, and solution coating thereon with an aqueous solution of the PVA-based resin (B).

Among them, the melt molding method is preferred because the laminate can be produced in one step and a laminate having excellent interlayer adhesiveness can be obtained, and the coextrusion method is particularly preferably used. Further, when the melt molding method is used, it is preferable to use a PVA-based resin having a 1,2-diol structural unit in the side chain as the PVA-based resin (B).

Specific examples of the above coextrusion method include an inflation method, a T-die method, a multi-manifold die method, a feed block method, and a multi-slot die method. As for the shape of the die a T die, a round die, or the like, can be used.

The melt molding temperature during melt extrusion is in a range of preferably from 190°C to 250°C, and more preferably from 200°C to 230°C.

The laminate according to the present invention may be a laminate further subj ected to a heat stretching treatment, and the stretching treatment is expected to improve the strength and the gas barrier properties.

Particularly, when a PVA-based resin having a 1,2-diol structural unit in the side chain is used as the PVA-based resin (B) in the laminate according to the present invention, the stretchability is enhanced.

As the above stretching treatment or the like, a known stretching method can be used.

Specific examples thereof include uniaxial stretching method and biaxial stretching method, in which both edges of a multilayer structure sheet are gripped and the width of the sheet is increased; a mold molding method in which a multilayer structure sheet is stretched using a mold such as a deep drawing molding method, a vacuum molding method, an air-pressure molding method, and a vacuum air-pressure molding method; and a method of processing a pre-molded multilayer structure such as a parison by a tubular stretching method, a stretch blowing method, and the like.

As the stretching method, when a molded product in film or sheet-like is desired to be obtained, it is preferable to use a uniaxial stretching method or a biaxial stretching method.

Further, in the case of the mold molding methods such as a deep drawing molding method, a vacuum molding method, an air-pressure molding method, and a vacuum air-pressure molding method, it is preferable that the laminate is uniformly heated in a hot air oven, a heater oven or a combination thereof, or the like, and then, stretch the heated laminate by a chuck, a plug, a vacuum force, a compressed air force, or the like.

When a molded product having a drawing ratio (a depth (mm) of the molded product / a maximum diameter (mm) of the molded product) of generally from 0.1 to 3, such as a cup and a tray is desired to be obtained, it is preferable to use a mold molding method in which a mold is used for stretching, such as a deep drawing molding method, a vacuum molding method, an air-pressure molding method, and a vacuum air-pressure molding method.

The laminate according to the present invention thus obtained has a strong adhesion force between any of the layers, for example, between the biodegradable resin (C) layer and the acid-modified polyester-based resin (A) layer, and between the PVA-based resin (B) layer and the acid-modified polyester-based resin (A) layer.

The acid-modified polyester-based resin (A) according to the present invention has excellent biodegradability. Further, since both the biodegradable resin (C) and the PVA-based resin (B) have biodegradability, the laminate according to the present invention including at least one layer of the acid-modified polyester-based resin (A) layer also has excellent biodegradability.

The laminate according to the present invention is biodegradable, and is thus suitable for use in a product that can be disposed in the compost as they are, for example, coffee capsules (coffee bean containers for capsule-type coffee makers), shrink films, and other food and beverage containers.

Further, when the laminate according to the present invention includes the PVA-based resin (B) layer, the PVA-based resin (B) layer can be dissolved in water and removed, and only the remaining water-insoluble resin can be recycled.

## Examples

Hereinafter, the present invention will be described with reference to Examples, but the present invention is not limited to the description of Examples as long as it does not depart from the gist of the present invention.
In Examples, the term "parts" and "%" are in terms of mass.

### <Test Example 1>

### [Example 1-1]

### [Preparation of Acid-modified Polyester-based Resin (A)]

As the raw material polyester-based resin (A'), 100 parts by mass of an adipic acid/terephthalic acid/1,4-butanediol polycondensate ("Ecoflex C1200" manufactured by BASF Corporation), 0.35 parts by mass of maleic anhydride (X), and 0.25 parts by mass of 2,5-dimethyl-2,5-bis(t-butyloxy)hexane ("PERHEXA 25B" manufactured by NOF CORPORATION) as the radical initiator (Y) were dry-blended, and then, the resulting mixture was melt-kneaded by a twin-screw extruder under the following conditions, extruded in a strand shape, followed by cooling with water. Then the strand was cut by a pelletizer to obtain an acid-modified polyester-based resin (A) in a cylindrical pellet form.
The content ratio (Y'/X) of the radical (Y') obtained from the radical initiator (Y) to the maleic anhydride (X) was 0.96 in molar ratio.

Twin-screw extruder
Screw diameter (D): 15 mm
Kneading unit: one
Screw length (L)/screw diameter (D): 60
Screw rotation speed: 650 rpm
Mesh: 90/90 mesh
Processing temperature: C1/C2/C3/C4/C5/C6/H = 30°C/160°C/160°C/160°C/160°C/160°C/200°C (C1 to C6: cylinder, H: head)

### [Measurement of MFR]

The MFR of the acid-modified polyester-based resin (A) obtained above was measured by the MFR measurement method described above. The results are shown in Table 1.

### [Preparation of PVA-based Resin (B) Layer]

To a reaction container equipped with a reflux condenser, a dropping funnel, and a stirrer, 68.0 parts by mass of vinyl acetate, 23.8 parts by mass of methanol, and 8.2 parts by mass of 3,4-diacetoxy-1-butene were charged, and then, 0.3% by mole of azobisisobutyronitrile (with respect to the amount of the charged vinyl acetate) was added thereto. Then, the temperature was increased under a nitrogen stream with stirring to initiate polymerization. When a polymerization rate of vinyl acetate reached 90%, m-dinitrobenzene was added thereto to end the polymerization. Subsequently, unreacted vinyl acetate monomer was removed from the system by a method of blowing in methanol vapor to obtain a methanol solution of a copolymer.
Then, the above solution was further diluted with methanol and adjusted to a concentration of 45%, and the obtained solution was charged into a kneader. While the solution temperature was maintained at 35°C, a methanol solution containing 2% sodium hydroxide was added thereto in an amount of 10.5 mmol with respect to 1 mole of the total amount of the vinyl acetate structural unit and the 3,4-diacetoxy-1-butene structural unit in the copolymer, thereby carrying out saponification. As the saponification proceeded, a saponified product was deposited, and when the form of the deposited saponified product was turned into a particle, the saponified product was separated by filtration, thoroughly washed with methanol and dried in a hot air dryer, to prepare a PVA-based resin (B) having a 1,2-diol structural unit in the side chain represented by the general formula (4').
The degree of saponification of the obtained PVA-based resin (B) was 99.2% by mole when analyzed based on an alkali consumption amount required for hydrolysis of the residual vinyl acetate and 3,4-diacetoxy-1-butene.
In addition, the average degree of polymerization of the PVA-based resin (B) was 450 when analyzed in accordance with JIS K 6726-1994.

In addition, the content of the 1,2-diol structural unit was 6% by mole when calculated from an integrated value measured by $^{1}$H-NMR (300 MHz proton NMR, d6-DMSO solution, internal standard substance: tetramethylsilane, 50°C).

[Preparation of Laminate]

By using a polylactic acid (C1) (Ingeo 4032D manufactured by Nature Works LLC), a PVA-based resin (B), and an acid-modified polyester-based resin (A) by a three-kind, five-layer multi-layer film formation device equipped with three extruders and a 45 cm wide of T die, to prepare a laminate having three-kind, five-layer structure including polylactic acid (C1) layer/acid-modified polyester-based resin (A) layer/PVA-based resin (B) layer/acid-modified polyester-based resin (A) layer/polylactic acid (C1) layer. The thickness of the obtained laminate was 100 μm, the thicknesses of the individual layers were as follows: 30 μm/10 μm/20 μm/10 μm/30 μm, and the width of the obtained laminate was 38 cm.

The set temperatures of each extruder and roll were as follows.

Set Temperature

(C1 to C4: respective cylinders, H: head, J: joint, FD1, 2: front dies, D1 to D3: dies)
Polylactic acid (C1): C1/C2/C3/C4/H/J = 180°C/190°C/200°C/200°C/200°C/200°C
PVA-based resin (B): C1/C2/C3/C4/H/J = 180°C/200°C/210°C/210°C/210°C/210°C
Acid-modified polyester-based resin (A): C1/C2/H/J = 180°C/200°C/210°C/210°C
Die: FD1/FD2/D1/D2/D3 = 200°C/200°C/200°C/200°C/200°C
Roll: 60°C

[Appearance Evaluation of Laminate]

The laminate obtained above was visually observed and evaluated based on the following criteria. The results are shown in Table 1.

A (good): no flow marks occur and the appearance is good.
B (poor): flow marks occur and the appearance is poor.

[Evaluation on Thickness Uniformity of Laminate]

The thickness uniformity in a TD direction of the laminate obtained above was evaluated by the following procedure.

A dot was marked at the center of the laminate in the TD direction, and 17 dots were marked at 1 cm intervals from the dot toward one end. Similarly, 17 dots were marked from the central dot toward the opposite end, for a total of 35 dots on the laminate. The thickness of the laminate at each point was measured with a thickness meter, an average and a standard deviation were determined, and the coefficient of variation (= standard deviation/average) was calculated. The results are shown in Table 2.

[Example 1-2] to [Example 1-4]

Each acid-modified polyester-based resin (A) and each laminate were prepared in the same manner as in Example 1-1 except that the screw rotation speed of the extruder was changed as shown in Table 1, unlike in the preparation of the acid-modified polyester-based resin (A) in Example 1-1. The appearance and the thickness uniformity of the obtained laminate were evaluated in the same manner as in Example 1-1. The results are shown in Table 1 and Table 2.

[Comparative Example 1-1] and [Comparative Example 1-2]

Each acid-modified polyester-based resin (A) and each laminate were prepared in the same manner as in Example 1-1 except that the screw rotation speed of the extruder was changed as shown in Table 1, unlike in the preparation of the acid-modified polyester-based resin (A) in Example 1-1. The appearance of the obtained laminate was evaluated in the same manner as in Example 1-1. The results are shown in Table 1 and Table 2.

**[Table 1]**

| | Production condition | Evaluation | |
|---|---|---|---|
| | Screw rotation speed (rpm) | MFR (g/10 min) | Appearance evaluation of laminate |
| Example 1-1 | 650 | 12.3 | A |
| Example 1-2 | 465 | 5.6 | A |
| Example 1-3 | 400 | 3.2 | A |
| Example 1-4 | 240 | 1.8 | A |
| Comparative Example 1-1 | 200 | 1.0 | B |
| Comparative Example 1-2 | 100 | 0.7 | B |

**[Table 2]**

| | Coefficient of variation of thickness of laminate |
|---|---|
| Example 1-1 | 0.30 |
| Example 1-2 | 0.24 |
| Example 1-3 | 0.09 |
| Example 1-4 | 0.32 |

The laminates of Examples 1-1 to 1-4 have an excellent appearance. On the other hand, the laminates of Comparative Examples 1-1 and 1-2, in which a polyester-based resin having a small MFR is used, have a poor appearance.

It is presumed that the laminates of Examples 1-1 to 1-4 have a sufficiently small coefficient of variation of the thickness of 0.32 or less, and therefore have a good appearance even when the laminates are subjected to a stretching treatment.

<Test Example 2>

[Example 2-1]

[Preparation of Acid-modified Polyester-based Resin (A)]

As the raw material polyester-based resin (A'), 100 parts by mass of an adipic acid/terephthalic acid/1,4-butanediol polycondensate ("Ecoflex C1200" manufactured by BASF), 0.35 parts by mass of maleic anhydride, and 0.25 parts by mass of 2,5-dimethyl-2,5-bis(t-butyloxy)hexane ("PERHEXA 25B" manufactured by NOF CORPORATION) as the radical initiator were dry-blended, and then, the resulting mixture was melt-kneaded in a twin-screw extruder under the following conditions. Then, the strand followed by cooling with water. Then, the strand was cut by a pelletizer to obtain an acid-modified polyester-based resin (A) in a cylindrical pellet form. The temperature of the resin during kneading was the value shown in Table 5.

Twin-screw extruder
Diameter (D): 69 mm

Kneading unit: one

Screw length (L)/diameter (D): 42
Mesh: 20/110/20 mesh
Discharge rate: 500 kg/h
Screw rotation speed (N): 400 rpm
Processing temperature: C1/C2/C3/C4/C5/C6/C7/C8/C9/C10/C11 = 30°C/30°C/30°C/30°C/30°C/160°C/160°C/160°C/160°C/160°C/160°C (C1 to C11: cylinder)

Based on the formula (I) and the formula (II), $|\alpha|$ of the acid-modified polyester-based resin (A) obtained above

was calculated. The results are shown in Table 3 and Table 5.

[Table 3]

| Storage temperature T (K) | MFR(0) | MFR(t) | | | | | MFR change rate coefficient K | \|α\| |
|---|---|---|---|---|---|---|---|---|
| | | t= 24 | t = 25 | t = 52 | t = 63 | t = 91 | | |
| 296.15 | 9.02 | 7.45 | - | 5.98 | 5.71 | 4.95 | 0.00667 | 3490 |
| 313.15 | 9.02 | - | 5.56 | 4.02 | 3.80 | 2.65 | 0.01301 | |
| 323.15 | 9.02 | - | 4.00 | 2.28 | 2.81 | 1.84 | 0.01662 | |
| 333.15 | 9.02 | - | 2.60 | 1.92 | 1.65 | - | 0.02561 | |

[Evaluation on Storage Stability]

The acid-modified polyester-based resin (A) obtained above was stored at 40°C for two months and evaluated based on the following criteria. The results are shown in Table 5.

A (good): |α| is less than 10000 and the storage stability is good.
B (poor): |α| is 10000 or more and the storage stability is poor.

[Preparation of PVA-based Resin (B) Layer]

To a reaction container equipped with a reflux condenser, a dropping funnel, and a stirrer, 68.0 parts by mass of vinyl acetate, 23.8 parts by mass of methanol, and 8.2 parts by mass of 3,4-diacetoxy-1-butene were charged, and then, 0.3% by mole of azobisisobutyronitrile (with respect to the amount of the charged vinyl acetate) was added thereto. Then, the temperature was increased under a nitrogen stream with stirring to initiate polymerization. When a polymerization rate of vinyl acetate reached 90%, m-dinitrobenzene was added thereto to end the polymerization. Subsequently, unreacted vinyl acetate monomer was removed from the system by a method of blowing in methanol vapor to obtain a methanol solution of a copolymer.
Then, the above solution was further diluted with methanol and adjusted to a concentration of 45%, and the obtained solution was charged into a kneader. While the solution temperature was maintained at 35°C, a methanol solution containing 2% sodium hydroxide was added thereto in an amount of 10.5 mmol with respect to 1 mole of the total amount of the vinyl acetate structural unit and the 3,4-diacetoxy-1-butene structural unit in the copolymer, thereby carrying out saponification. As the saponification proceeded, a saponified product was deposited, and when the form of the deposited saponified product was turned into a particle, the saponified product was separated by filtration, thoroughly washed with methanol and dried in a hot air dryer, to prepare a PVA-based resin (B) having a 1,2-diol structural unit in the side chain represented by the general formula (4').
The degree of saponification of the obtained PVA-based resin (B) was 99.2% by mole when analyzed based on an alkali consumption amount required for hydrolysis of the residual vinyl acetate and 3,4-diacetoxy-1-butene.
In addition, the average degree of polymerization of the PVA-based resin (B) was 450 when analyzed in accordance with JIS K 6726-1994.
In addition, the content of the 1,2-diol structural unit was 6% by mole when calculated from an integrated value measured by $^{1}H$-NMR (300 MHz proton NMR, d6-DMSO solution, internal standard substance: tetramethylsilane, 50°C).

[Preparation of Laminate]

By using a polylactic acid (C1) (Ingeo 4032D manufactured by Nature Works LLC), a PVA-based resin (B), and an acid-modified polyester-based resin (A) by a three-kind, five-layer multi-layer film formation device equipped with three extruders, to prepare a laminate three-kind, five-layer structure including polylactic acid (C1) layer/acid-modified polyester-based resin (A) layer/PVA-based resin (B) layer/acid-modified polyester-based resin (A) layer/polylactic acid (C1) layer. The thickness of the obtained laminate was 100 μm, and the thicknesses of the individual layers were as follows: 30 μm/10 μm/20 μm/10 μm/30 μm.
The set temperatures of each extruder and roll were as follows.

Set Temperature

(C1 to C4: respective cylinders, H: head, J: joint, FD1, 2: front dies, D1 to D3: dies)
Polylactic acid (C1): C1/C2/C3/C4/H/J = 180°C/190°C/200°C/200°C/200°C/200°C
PVA-based resin (B): C1/C2/C3/C4/H/J = 180°C/200°C/210°C/210°C/210°C/210°C
Acid-modified polyester-based resin (A): C1/C2/H/J = 180°C/200°C/210°C/210°C
Die: FD1/FD2/D1/D2/D3 = 200°C/200°C/200°C/200°C/200°C
Roll: 60°C

[Appearance Evaluation of Laminate]

The laminate obtained above was visually observed and evaluated based on the following criteria. The results are shown in Table 5.

A (good): no flow marks occur and the appearance is good.
B (poor): flow marks occur and the appearance is poor.

[Comparative Example 2-1]

An acid-modified polyester-based resin (A) and a laminate were prepared in the same manner as in Example 2-1 except that the discharge rate (Q) was changed to 300 kg/hr and the screw rotation speed (N) was changed to 264 rpm during the graft reaction, unlike in the preparation of the acid-modified polyester-based resin (A) in Example 2-1. The ratio (Q/N (kg/(hr-rpm))) of the discharge rate (Q (kg/hr)) to the screw rotation speed (N (rpm)) during the graft reaction and the resin temperature are as shown in Table 5. $|\alpha|$ was calculated based on the above formula (I) and formula (II). The results are shown in Table 4. The obtained acid-modified polyester-based resin was used to evaluate the storage stability in the same manner as in Example 2-1 and the obtained laminate was used to evaluate the appearance. The results are shown in Table 5.

[Table 4]

| Storage temperature T (K) | MFR(0) | MFR(t) | | | MFR change rate coefficient K | $\lvert\alpha\rvert$ |
|---|---|---|---|---|---|---|
| | | t = 31 | t = 63 | t = 83 | | |
| 278.15 | 1.62 | 1.78 | 1.59 | 1.61 | 0.00046 | 10640 |
| 296.15 | 1.62 | 1.44 | 1.14 | 0.99 | 0.00605 | |
| 303.15 | 1.62 | 1.18 | 0.74 | 0.58 | 0.01262 | |
| 313.15 | 1.62 | 0.67 | 0.22 | - | 0.03171 | |

**[Table 5]**

| | Resin temperature (°C) | Q/N (kg/(hr·rpm)) | $\lvert\alpha\rvert$ | Storage stability | Appearance evaluation |
|---|---|---|---|---|---|
| Example 2-1 | 302 | 1.25 | 3490 | A | A |
| Comparative Example 2-1 | 257 | 1.14 | 10640 | B | B |

The resin composition in Example 2-1 had excellent storage stability. In addition, the laminate in Example 2-1 had a good appearance and is therefore had excellent melt moldability.
On the other hand, the resin composition in Comparative Example 2-1, which contains a polyester-based resin that did not satisfy $|\alpha| < 10000$, had poor storage stability due to the progress of resin deterioration.
Although the present invention has been described in detail with reference to the specific embodiment, it will be apparent to those skilled in the art that various changes and modifications can be made without departing from the spirit

and scope of the present invention. The present application is based on a Japanese Patent Application (No. 2022-051108) filed on March 28, 2022 and a Japanese Patent Application (No. 2022-051567) filed on March 28, 2022, contents of which are incorporated herein by reference.

INDUSTRIAL APPLICABILITY

The acid-modified polyester-based resin (A) according to the present invention can be suitably used as an adhesive layer between the PVA-based resin (B) layer and the biodegradable resin (C) layer.

The obtained laminate has biodegradability, and is thus suitable for use in a product that can be disposed in the compost as they are, for example, coffee capsules (coffee bean containers for capsule-type coffee makers), shrink films, and other food and beverage containers.

## Claims

1. An acid-modified polyester-based resin wherein an α,β-unsaturated carboxylic acid and/or an anhydride thereof (X) is grafted to an aliphatic-aromatic polyester-based resin containing an aliphatic diol unit, an aliphatic dicarboxylic acid unit, and an aromatic dicarboxylic acid unit,

   the acid-modified polyester-based resin has a melt flow rate (210°C, load: 2160 g) of 1.4 g/10 min to 15 g/10 min, and
   a content of the α,β-unsaturated carboxylic acid and/or an anhydride thereof (X) is 0.0001 to 0.8 parts by mass with respect to 100 parts by mass of the aliphatic-aromatic polyester-based resin.

2. The acid-modified polyester-based resin according to claim 1, comprising the aliphatic diol unit and the aliphatic dicarboxylic acid unit in a total amount of 50% by mole or more.

3. The acid-modified polyester-based resin according to claim 1 or 2, wherein a radical initiator (Y) is contained during grafting.

4. The acid-modified polyester-based resin according to claim 3, wherein a content ratio (Y'/X) of a radical (Y') obtained from the radical initiator (Y) to the α,β-unsaturated carboxylic acid and/or an anhydride thereof (X) is 0.5 to 5 in molar ratio.

5. An acid-modified polyester-based resin, wherein a temperature-dependent coefficient α determined by plotting an MFR (melt flow rate) change rate coefficient K, which is calculated by plotting a change of an MFR over time during storage at a plurality of temperatures according to the following formula (I), at each storage temperature based on the following formula (II) satisfies the following formula (III):

$$MFR(t) = MFR(0) \times e^{\wedge}(-K \times t) \qquad (I)$$

$$\ln(K) = \alpha/T + \beta \qquad (II)$$

$$|\alpha| < 10000 \qquad (III)$$

   (in the above formula (I), MFR(t) represents the MFR (210°C, load: 2160 g) of the resin after t days of storage, MFR(0) represents the MFR (210°C, load: 2160 g) of the resin at start of storage, K is the MFR change rate coefficient, and t is an elapsed time (days) from the start of storage; in the above formula (II), T represents the storage temperature (K), and β represents a constant term; and in the above formula (II) and formula (III), α represents the temperature-dependent coefficient of the MFR change rate coefficient).

6. The acid-modified polyester-based resin according to claim 5, comprising at least one structural unit selected from the structural units represented by the following general formulae (1) to (3):

[Chem. 1]

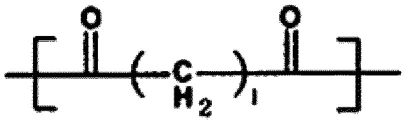

(1)

wherein 1 is an integer of 2 to 8,

[Chem. 2]

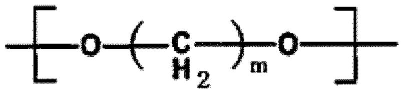

(2)

wherein m is an integer of 2 to 10, and

[Chem. 3]

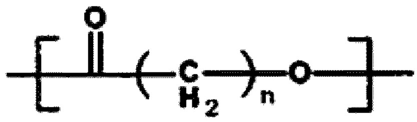

(3)

wherein n is an integer of 2 to 9.

**7.** The acid-modified polyester-based resin according to claim 6, comprising at least one structural unit selected from the structural units represented by the above general formulae (1) to (3) in a total amount of 50% by mole or more.

**8.** The acid-modified polyester-based resin according to any one of claims 5 to 7 wherein an $\alpha,\beta$-unsaturated carboxylic acid and/or an anhydride thereof (X) is grafted to a polyester-based resin.

**9.** A biodegradable adhesive comprising:
the acid-modified polyester-based resin according to any one of claims 1 to 8.

**10.** A laminate comprising:
at least one layer containing the acid-modified polyester-based resin according to any one of claims 1 to 8.

**11.** A laminate comprising:

a polyvinyl alcohol resin (B) layer; a biodegradable resin (C) layer; and an adhesive layer between the above two layers, wherein
the adhesive layer contains the acid-modified polyester-based resin according to any one of claims 1 to 8.

## INTERNATIONAL SEARCH REPORT

International application No.
**PCT/JP2023/012697**

**A. CLASSIFICATION OF SUBJECT MATTER**

***C08G 63/91***(2006.01)i; ***B32B 27/30***(2006.01)i; ***B32B 27/36***(2006.01)i; ***C08L 101/16***(2006.01)i
FI: C08G63/91 ZBP; B32B27/36; C08L101/16; B32B27/30 102

According to International Patent Classification (IPC) or to both national classification and IPC

**B. FIELDS SEARCHED**

Minimum documentation searched (classification system followed by classification symbols)

C08G63/91; B32B27/30; B32B27/36; C08L101/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/049798 A1 (THE NIPPON SYNTHETIC CHEMICAL INDUSTRY CO., LTD.) 14 March 2019 (2019-03-14) claims, paragraph [0056], examples | 1-11 |
| X | JP 2019-038944 A (THE NIPPON SYNTHETIC CHEMICAL INDUSTRY CO., LTD.) 14 March 2019 (2019-03-14) claims, paragraph [0033], examples | 1-11 |
| A | JP 2014-098111 A (MITSUBISHI CHEMICAL CORP.) 29 May 2014 (2014-05-29) entire text | 1-11 |
| A | JP 2019-157005 A (MCPP INNOVATION LLC) 19 September 2019 (2019-09-19) entire text | 1-11 |
| A | JP 2019-181943 A (MITSUBISHI CHEMICAL CORP.) 24 October 2019 (2019-10-24) entire text | 1-11 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/012697**

| Patent document cited in search report | Publication date (day/month/year) | Patent family member(s) | Publication date (day/month/year) |
|---|---|---|---|
| WO 2019/049798 A1 | 14 March 2019 | US 2020/0231730 A1<br>claims, paragraph [0066], examples<br>EP 3680267 A1 | |
| JP 2019-038944 A | 14 March 2019 | (Family: none) | |
| JP 2014-098111 A | 29 May 2014 | (Family: none) | |
| JP 2019-157005 A | 19 September 2019 | (Family: none) | |
| JP 2019-181943 A | 24 October 2019 | US 2020/0384750 A1<br>EP 3778233 A1<br>CN 111867836 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000177072 A
- JP 2009196287 A
- JP 2013212682 A
- JP 2015143356 A